(19) Europäisches Patentamt
European Patent Office
Office européen des brevets

(11) Veröffentlichungsnummer: **0 237 471**
**A2**

(12) # EUROPÄISCHE PATENTANMELDUNG

(21) Anmeldenummer: **87810058.5**

(22) Anmeldetag: **29.01.87**

(51) Int. Cl.³: **C 08 G 12/08**
C 08 G 59/50, C 08 G 18/32

(30) Priorität: **04.02.86 US 826156**

(43) Veröffentlichungstag der Anmeldung:
**16.09.87 Patentblatt 87/38**

(84) Benannte Vertragsstaaten:
**CH DE FR GB IT LI NL SE**

(71) Anmelder: **CIBA-GEIGY AG**
**Klybeckstrasse 141**
**CH-4002 Basel(CH)**

(72) Erfinder: **Lee, Byung H.**
**17 Ox Drive**
**Brookfield, CT 06805(US)**

(54) **Mischungen aromatischer Diamine als Härter für Epoxid- und Urethanharze.**

(57) Eine Mischung aromatischer Diamine, erhältlich durch Umsetzung eines Toluidins mit O-Ethylanilin und Formaldehyd in Gegenwart eines sauren Katalysators, kann als Härter für Epoxid- und Urethanharze eingesetzt werden.

EP 0 237 471 A2

Croydon Printing Company Ltd.

0237471

CIBA-GEIGY AG
Basel (Schweiz)

3-15738/CGC 1178
EP

# Mischungen aromatischer Diamine als Härter für Epoxid- und Urethanharze

Amine und Aminderivate werden häufig als Härtungsmittel für Epoxidharze verwendet. Dabei werden die Amine in bezüglich der Epoxidharztechnologie bekannter Weise mit den Epoxidharzen verarbeitet. Typischerweise vermischt man ein flüssiges Amin mit einem Epoxidharz, gegebenenfalls unter Erwärmung. Das Vermischen der Komponenten wird erleichtert, wenn das aminische Härtungsmittel eine flüssige oder niedrigschmelzende Substanz ist.

Solche aminischen Härtungsmittel und ihre Wirkungsweise werden von Lee und Neville im "Handbook of Epoxy Resins", McGraw Hill (1967) diskutiert. Als solches Amin ist insbesondere das 4,4-Methylendianilin zu nennen. Ausserdem werden im US-Patent 3,427,282 bestimmte 4,4'-Methylen-bis(2-alkylaniline) als Härtungsmittel für Epoxidharze offenbart, wobei die Alkylgruppe Ethyl oder sekundäres $C_3$-$C_6$-Alkyl darstellt. Während diese Härtungsmittel bestimmte wünschenswerte Eigenschaften besitzen, haben sie häufig den Nachteil von übermässig langen Gelierungszeiten und dass die gehärteten Produkte niedrige Glasumwandlungstemperaturen aufweisen, wodurch ihre Anwendbarkeit eingeschränkt wird.

Ueberraschenderweise wurde nun gefunden, dass man durch Umsetzen eines Toluidin mit o-Ethylanilin und Formaldehyd in Gegenwart eines sauren Katalysators eine Mischung von aromatischen Aminen erhält, welche als Härtungsmittel für Epoxid- und Urethanharze besser geeignet ist. Die Mischung der aromatischen Amine verleiht den

Harzmischungen eine kürzere Gelierungszeit, und die daraus durch Härtung erhaltenen Produkte weisen eine höhere Glasumwandlungstemperatur auf. Diese Kombination von Eigenschaften ist besonders wertvoll für die Anwendung der härtbaren Harzgemische als Klebstoffe, Beschichtungen, Verbundwerkstoffe, für Faserwicklungen, als Giess- oder Formmassen. Ausserdem werden die erfindungsgemässen aromatischen Aminmischungen als nichtcarcinogen angesehen, sie sind bei Raumtemperatur flüssig oder stellen niedrigschmelzende Substanzen dar.

Gegenstand der vorliegenden Erfindung sind somit Härter für Epoxid- und Urethanharze, enthaltend die in Gegenwart eines sauren Katalysators hergestellten Umsetzungsprodukte eine Toluidins mit o-Ethylanilin und Formaldehyd.

Die allgemeinen Reaktionsbedingungen für die Umsetzung von Formaldehyd mit alkylierten Anilinderivaten sind bekannt, beispielsweise aus dem US-Patent 3,427,282. Die erfindungsgemässen Mischungen aromatischer Amine können beispielsweise hergestellt werden, indem man o-Ethylanilin, das ausgewählte Toluidin oder ein Gemisch von Toluidinen, zum Beispiel aus o-, m- oder p-Toluidin, und den sauren Katalysator in wässrigem Medium mischt. Der saure Katalysator kann eine Mineralsäure sein, wie vorzugsweise Salz- oder Schwefelsäure. Die Temperatur der Mischung wird allgemein auf 60 bis 80°C gehalten, bei welcher Formaldehyd der Mischung zugegeben wird. Dann wird das Reaktionsgemisch für etwa 1 Stunde auf 70 bis 90°C gehalten. Danach wird die Säure neutralisiert, zum Beispiel mit Alkalilauge, und zur Vervollständigung der Umsetzung wird das Reaktionsgemisch weiter für etwa 2 Stunden auf 60 bis 80°C gehalten. Das erhaltene Reaktionsgemisch ist bei Raumtemperatur entweder flüssig oder niedrigschmelzend. Das Gemisch kann allgemein durch die folgende Formel weitergegeben werden,

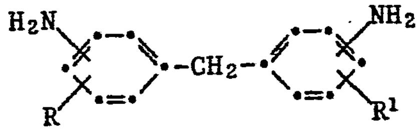

worin R und $R^1$ gleich oder verschieden sein können und für Methyl oder Ethyl stehen, wobei R, $R^1$ und die Aminogruppen verschiedene Positionen am Phenylring einnehmen können.

Vorzugsweise setzt man zur Umsetzung o-Ethylanilin und das entsprechende Toluidin im Molverhältnis von 9:1 bis 1:9, insbesondere von 7:3 bis 3:7 ein. Der Formaldehyd wird im allgemeinen in stöchiometrischen Mengen und der saure Katalysator in Konzentrationen von 210 bis 250 %, bezogen auf die Molmenge von o-Ethylanilin und Toluidin, zugesetzt.

Wie eingangs erwähnt, können die erfindungsgemässen Gemische aromatischer Diamine für eine Vielzahl von Epoxidharzen, die mehr als eine Epoxidgruppe im Molekül aufweisen, verwendet werden. Solche Epoxidharze können sich beispielsweise von mehrwertigen Phenolen, wie Bisphenol A, F und S, von Phenol- oder Kresolnovolaken ableiten. Ferner geeignete Epoxidharze sind Diglycidylverbindungen von Hydantoinen, Polyglycidylester, glycidylierte aromatische Amine, glydidylierte Aminophenole und bestimmte cycloaliphatische Epoxidharze. Für Verklebungen, Beschichtungen und das Faserwicklungsverfahren werden in der Regel Diglycidylether auf Basis von Bisphenol A eingesetzt. Die erfindungsgemässen Härter werden in stöchiometrischen Mengen bzw. in Abweichung von + oder - 50 % der stöchiometrischen Menge, bezogen auf das Epoxidharz eingesetzt. Bevorzugt wird die Härtermenge im Bereich von ± 15 % der stöchiometrischen Menge verwendet, bezogen auf das Epoxidharz.

Abgesehen von den oben beschriebenen Anwendungsgebieten, sind die erfindunggemässen Härter auch für eine Vielzahl von Epoxidharzen nützlich, die bei der Heisshärtung Anwendung finden.

Besonders bevorzugt setzt man die erfindungsgemässen Härter bei der Bildung von Beschichtungen ein, da sie sich gut mit Epoxidharzen vertragen und da die resultierenden gehärteten Ueberzüge eine verbesserte Zähigkeit aufweisen.

Gegenstand der vorliegenden Erfindung sind somit auch härtbare Mischungen, enthaltend ein Epoxidharz und einen erfindungsgemässen Härter.

Wenn die erfindungsgemässen Härter beispielsweise mit Di- oder Polyepoxiden in üblicherweise stöchiometrischen Mengen kombiniert werden und bei erhöhten Temperaturen gehärtet werden, so entsteht ein Netzwerk mit hoher Vernetzungsdichte.

Der Ausdruck "Härten", so wie er hier gebraucht wird, bedeutet die Ueberführung der obenerwähnten härtbaren Mischungen in unlösliche und nicht schmelzbare, vernetzte Produkte, unter gleichzeitiger Formgebung, wobei geformte Artikel entstehen, beispielsweise Giesslinge, Presslinge oder Laminate, oder wobei zweidimensionale Strukturen entstehen, wie beispielsweise Beschichtungen, Lacke oder Klebverbindungen.

Die erfindungsgemässen härtbaren Mischungen können darüber hinaus auf jeder Stufe vor der Härtung noch mit weiteren üblichen Zusätzen versehen werden, wie beispielsweise mit Streckmitteln, Füllstoffen und Verstärkungsmitteln, Pigmenten, Farbstoffen, organischen Lösungsmitteln, Weichmachern, Mitteln zur Beeinflussung der Klebrigkeit, Kautschuken, Härtungsbeschleunigern oder Verdünnungsmitteln.

Zu den Steckmitteln, Verstärkungsmitteln, Füllstoffen und Pigmenten, die in den erfindungsgemässen härtbaren Mischungen verwendet werden können, zählen beispielsweise Kohleteer, Bitumen, Glasfasern, Borfasern, Kohlefasern, Cellulose, Polyethylenpulver, Polypropylenpulver, Glimmer, Asbest, Quarzmehl, Gips, Antimontrioxid, Bentone, Talkum, Kieselgel (Aerosil®), Lithopone, Baryt, Calciumcarbonat, Titandioxid, Russ, Graphit, Eisenoxid oder Metallpulver, wie beispielsweise Aluminiumpulver oder Eisenpulver.
Es können darüber hinaus noch weitere übliche Additive den erfindungsgemässen Mischungen zugesetzt werden. Beispiele dafür sind Mittel zur Erhöhung der Flammfestigkeit, Thixotropiemittel, Mittel zur Kontrolle der Fliesseigenschaften, beispielsweise Silikone,

Celluloseacetatbutyrat, Polyvinylbutyral, Wachse oder Stearate. Solche Zusätze werden teilweise als Entformungsmittel verwendet. Gegebenenfalls verwendete Beschleuniger dienen zur Erhöhung der Härtungsgeschwindigkeit bei der Herstellung von dünnen Filmen, d.h., bei Filmen mit einer maximalen Dicke von 200 µm pro Schicht. Typische Beschleuniger sind beispielsweise aromatische Carbonsäuren, wie Benzosäure und Salicylsäure, Phenole, wie Phenol, p-tert.Butylphenol, Bisphenol A und Nonylphenol, oder aromatische Alkohole, wie Benzylalkohol.
Gegebenenfalls eingesetzte Lösungsmittel modifizieren die härtbaren Mischungen; sie dienen insbesondere zur Viskositätskontrolle. Als Lösungsmittel lassen sich beispielsweise Etheralkohole einsetzen, wie Ethylenglykol-monomethylether, -monoethylether, -monobutylether, sowie die entsprechenden Diethylenglykol-Analogen; oder es lassen sich aromatische Kohlenwasserstoffe verwenden, wie beispielsweise Xylol oder Toluol. Ferner ist es möglich, beispielsweise bei Klebstofformulierungen, Kautschuke zuzusetzen, beispielsweise carboxylterminierte Acrylnitril-Butadien-Kautschuke, oder modifizierende Harze, wie beispielsweise Triglycidyl-p-aminophenol, oder Beschleuniger, wie beispielsweise Komplexe von Bortrifluorid mit Monoethylamin oder mit Imidazolen. Ferner können noch weitere Härter anwesend sein, wie beispielsweise Dicyandiamid.

Die erfindungsgemässen härtbaren Mischungen können in der üblichen Art und Weise hergestellt werden, z.B. durch Verarbeitung in herkömmlichen Mischern (Rührer, Kneter, Roller).

Die härtbaren Epoxidharzmischungen sind besonders nützlich auf dem Gebiet des Oberflächenschutzes, in der elektrischen Industrie, bei Laminierverfahren und in der Bauindustrie. Sie können als Formulierungen eingesetzt werden, die von Fall zu Fall an den vorgesehenen Verwendungszweck angepasst sind, in gefüllter oder ungefüllter Form, gegebenenfalls als Lösungen oder Emulsionen, als Anstrichfarben, Sinterpulver, Pressmassen, Tauchharze, Giessharze, Spritzgussformulierungen, Imprägnierharze und Klebstoffe, als

Werkstoffharze, Laminierharze, Verguss- und Füllstoffmassen, als Fussbodenbedeckungen oder als Bindemittel für mineralische Aggregate.

Die erfindungsgemässen Gemische aromatischer Diamine können auch zum Härten von einer Vielzahl von Urethanharzen unter Anwendung verschiedener Heisshärtungsverfahren verwendet werden. Als Härtungsmittel können die erfindungsgemässen Härter leicht nach an sich bekannten Techniken mit den Urethanharzen vermischt werden.

Gegenstand vorliegender Erfindung sind ferner auch härtbare Mischungen, enthaltend ein Urethanharz und einen erfindungsgemässen Härter.

Als Polyisocyanate, welche zur Herstellung der härtbaren Urethanharze verwendet werden können, kommen die üblicherweise in der Urethanharzherstellung verwendeten Polyisocyanate in Betracht, wie beispielsweise Toluoldiisocyanat, 4,4'-Diphenylmethandiisocyanat, Polyarylpolyisocyanate oder Hexamethylendiisocyanat, oder auch weniger gängige Ausgangsmaterialien, wie beispielsweise Phenylindandiisocyanat.

Bekanntermassen sind Harze, die sich von solchen Isocyanaten ableiten, spröde, so dass es in den meisten Fällen angebracht und bevorzugt ist, modifizierte Präpolymere mit durchschnittlich mehr als einer Isocyanatgruppe pro Molekül einzusetzen. Solche Präpolymere leiten sich üblicherweise von einem der oben erwähnten Diisocyanate ab, das in molarem Ueberschuss mit einer Verbindung, enthaltend mindestens zwei Hydroxylgruppe im Molekül und mit einem Molkulargewicht von wengistens 300, beispielsweise mit Rizinusöl, einem hydroxyterminierten Polyether, einem hydroxyterminierten Polyester, einem hydroxyterminierten Polybutadien oder Butadien-Acrylnitril-Copolymeren, umgesetzt wird.

Als hydroxyterminierter Polyether wird beispielsweise ein Polyalkylenglykol verwendet, worin jede Alkylengruppe zwischen 2 und 6 Kohlenstoffatome enthält.

Als hydroxyterminierter Polyester wird vorzugsweise ein aliphatischer Polyester eingesetzt, der sich ableitet von einem $C_2$-$C_6$Alkylenglykol und einer aliphatischen Polycarbonsäure, die neben den Carboxylgruppen lediglich Kohlenwasserstoffgruppen enthält; die bevorzugte Kohlenstoffanzahl dieser Säure beträgt zwischen 3 und 10.

Polyether, wie beispielsweise Polyethylenglykol, Polypropylenglykol oder Polytetramethylenglykol mit Molekulargewichten zwischen 300 und 2000 werden bevorzugt, ebenso werden die hydroxyterminierten Polyester beliebiger Polyalkylenglykole bevorzugt, insbesondere diejenigen, die sich von $C_2$-$C_6$Alkylenglykolen mit Polycarbonsäuren enthaltend 3 bis 10 Kohlenstoffatome und enthaltend ausser den Carboxylgruppen nur noch Kohlenwasserstoffreste ableiten. Diese bevorzugten Polyester besitzen mittlere Aequivalentgewichte von 150 bis 1000, bezogen auf die Hydroxylgruppen, und haben 2 bis 4 Hydroxylgruppen pro Molekül.

Bevorzugt werden diejenigen Präpolymeren, die durch Umsetzung von wenigstens zwei molaren Anteilen eines Diisocyanates, wie oben erwähnt, mit einem Polyalkylenglykol, wie oben erwähnt, erhalten werden, wobei ein Präpolymer entsteht, das ein Aequivalentgewicht von 400 bis 1500, bezogen auf die Isocyanatgrupen, besitzt. Es können jedoch auch andere Präpolymere mit einem Aequivalentgewicht wie oben definiert eingesetzt werden. Ebenso kann man partiell blockierte Polyisocyanate verwenden.

Kombiniert man die erfindungsgemässen Härter mit Urethanharzen in üblicherweise stöchiometrischen Mengen und härtet diese bei erhöhten Temperaturen, so entsteht beim Endprodukt das bereits weiter oben für die Epoxidharze erwähnte Netzwerk hoher Verknüpfungsdichte.

Die Polyurethansysteme können gegebenenfalls noch mit weiteren unterschiedlichen Zusatzstoffen vermischt werden, wie sie oben für Epoxidharzsysteme aufgeführt wurden, oder mit speziellen Polyurethanstreckmitteln oder -weichmachern.

Falls nicht anderes vermerkt wird, bedeuten in den folgenden Beispielen Teile Gewichtsteile.

Beispiel 1: Eine Mischung aus 123,7 g o-Ethylanilin (1,0 Mol), 110,5 g m-Toluidin (1,0 Mol) und 400 ml Wasser wird auf 40°C erwärmt und dann langsam mit 450 g konzentrierter Schwefelsäure vermischt, wobei die Temperatur zwischen 50 und 55°C gehalten wird. Nach Beendigung der Zugabe von Schwefelsäure werden unter Rühren 81,1 g Formaldehyd (37 %-ig; 1,0 Mol) in 40 ml Methanol dem Reaktionsgemisch zugegeben, wobei die Temperatur unterhalb von 75°C gehalten wird. Anschliessend wird das Reaktionsgemisch noch eine Stunde bei 80 bis 85°C gerührt. Das Reaktionsgemisch wird auf 60 bis 65°C gekühlt und dann unter Rühren mit 164 g einer 50 %-igen wässrigen Natronlauge versehen, wobei die Temperatur auf 70 bis 75°C gehalten wird. Danach wird das Reaktionsgemisch noch 2 Stunden bei 75 bis 80°C gerührt. Die Reaktionslösung wird vom ausgefallenen Salz abgetrennt, zweimal mit Wasser gewaschen und dann mittels Vakuumdestillation (0,05 mbar; 160°C) von flüchtigen Anteilen befreit. Der Rückstand wird heiss filtriert und das erhaltene Produkt stellt eine dunkelrote viskose Flüssigkeit dar.

Beispiel 2: Die Arbeitsweise von Beispiel 1 wird wiederholt, wobei beim ersten Mal o-Ethylanilin und m-Toluidin im Molverhältnis von 7:3 und beim zweiten Mal im Molverhältnis von 3:7 eingesetzt werden. Beide Male stellt das erhaltene Produkt eine rote viskose Flüssigkeit dar.

Beispiel 3: 100 Teile Bisphenol A-diglycidylether mit einem Epoxidgehalt von 5,1 bis 5,5 Aequivalenten/kg und 32 Teile des in Beispiel 1 hergestellten Härters werden bei 100°C gemischt, bis eine homogene Mischung entsteht. An Proben dieser Mischung wird auf einer

auf 150°C aufgeheizten Heizplatte die Gelierzeit mittels eines Brabender Rotationsviskosimeters bestimmt. Die Gelierzeit dieser Mischung, d.h., die Zeit bis die rotierende Schwingungsbewegung null wird, beträgt 5 Minuten.

Ferner werden Proben der Mischung unter Rühren auf 100°C erwärmt. und anschliessend unter Vakuum ($3,5 \cdot 10^3$ Pa) während 15 Minuten entgast. Die Mischung wird dann in 0,125 cm dicke Aluminiumformen gegossen und 2 Stunden bei 150°C ausgehärtet. Aus den gehärteten Formstoffen werden Prüfkörper der Grösse 0,25 x 0,25 x 0,125 cm ausgestanzt und zur Bestimmung der Glasumwandlungstemperatur mittels eines Perkin-Elmer-Thermoanalyzers (20°C/min, Eindringgewicht: 40 g) verwendet. Die Glasumwandlungstemperatur beträgt 143°C.

Beispiel 4: 100 Teile eines cycloaliphatischen Isocyanat-Urethangiessharzes mit einem Isocyanatgehalt von 2,3 bis 2,4 Aequivalenten/kg, 26 Teile des gemäss Beispiel 1 hergestellten Härters und 32 Teile Dioctylphthalat als Plastifizierungsmittel werden zu einer homogenen Mischung verarbeitet. Die Anfangsviskosität dieser Mischung wird in einem Brookfield Viskosimeter bei 25°C zu 3,7 Pa•s bestimmt. Dann wird die Zeit, in welcher die Viskosität auf 20 Pa•s ansteigt, ermittelt, welche der Gebrauchsdauer dieser Mischung entspricht. Sie beträgt 16 Minuten.

Patentansprüche

1. Härter für Epoxid- und Urethanharze, enthaltend die in Gegenwart eines sauren Katalysators hergestellten Umsetzungsprodukte eines Toluidins mit o-Ethylanilin und Formaldehyd.

2. Härter gemäss Anspruch 1, worin im Umsetzungsprodukt das Molverhältnis von Toluidin zu o-Ethylanilin 1:9 bis 9:1 beträgt.

3. Härter gemäss Anspruch 1, worin im Umsetzungsprodukt das Molverhältnis von Toluidin zu o-Ethylanilin 7:3 bis 3:7 beträgt.

4. Härter gemäss Anspruch 1, worin das Toluidin m-Toluidin ist.

5. Härtbare Mischung, enthaltend einen Härter gemäss Anspruch 1 und ein Epoxidharz.

6. Härtbare Mischung gemäss Anspruch 5, enthaltend den Härter und das Epoxidharz in stöchiometrischen Mengen mit Abweichungen von ± 50 % der stöchiometrischen Menge.

7. Das aus einer Mischung gemäss Anspruch 5 durch Härtung bei erhöhter Temperatur erhaltene Produkt.

8. Härtbare Mischung, enthaltend einen Härter gemäss Anspruch 1 und ein Urethanharz.

9. Das aus einer Mischung gemäss Anspruch 8 durch Härtung bei erhöhter Temperatur erhaltene Produkt.

FO 7.3/STA/we*